# DEMANDE DE BREVET EUROPEEN

(11) **EP 1 918 745 A1**
(43) Date de publication de la demande: **07.05.2008**
(21) Numéro de dépôt: 07119453.4
(22) Date de dépôt: 29.10.2007
(51) Int. Cl.: G02B 6/122, B81C 1/00, H01L 21/30

(54) **Procédé de réalisation d'un guide à fente**

(30) Priorité: 31.10.2006 FR 0654670
(71) Demandeur: Commissariat à l'Energie Atomique, 75015 Paris (FR)
(72) Inventeur: Jordana, Emmanuel, 38000, GRENOBLE (FR); Fedeli, Jean-Marc, 38120, SAINT-EGREVE (FR); El Melhaoui, Loubna, 38000, GRENOBLE (FR)
(74) Mandataire: Ilgart, Jean-Christophe

(57) **Abrégé**

L'invention concerne un procédé de réalisation d'un guide à fente, dans lequel :
a) on forme une couche de matériau (26) d'indice de réfraction inférieur à celui du silicium sur une première couche de silicium (24) qui repose elle-même sur une couche (22) d'oxyde de silicium (SiO₂),
puis :
b) on forme une deuxième couche de silicium (28) sur ladite couche de matériau (26), cette deuxième couche constituant un empilement avec la couche de matériau (26) d'indice de réfraction inférieur à celui du silicium et la première couche de silicium (24), la couche de matériau (26) d'indice de réfraction inférieur à celui du silicium étant comprise entre les deux couches de silicium ;
c) on grave cet empilement, la couche (22) d'oxyde de silicium (SiO₂) formant couche d'arrêt de cette gravure.

## Description

L'invention se situe dans le domaine de la « Nano Photonique Silicium » (domaine du guidage de lumière dans des guides de dimensions nanométriques) et concerne principalement les interconnections optiques sur puce de silicium et notamment la réalisation de portes logiques photoniques.

Des fonctions optiques à forte intégration peuvent être réalisées sur silicium. Dans une approche générale, on dispose d'émetteurs (intégrés ou rapportés, commandés électriquement) couplés à un ensemble de guides qui réalise une fonction optique soit passivement, soit en fonction d'une commande électrique. Ces guides aboutissent à des photodétecteurs qui délivrent électriquement le résultat de la fonction optique.

Le fonctionnement d'un guide à fente met en oeuvre une propagation dans un milieu de faible indice et une discontinuité d'indice qui permet un excellent confinement de la lumière. Cette architecture a, jusqu'à maintenant, permis :
- la conception de commutateurs optiques et de sources de lumière dans les circuits intégrés photoniques, comme décrit dans les articles de C.A. Barrios, Electronics Letters, 40, pp862-863, 2004 et C.A. Barrios et al., Optics Express, 13(25), pp.10092-10101, 2005;
- la réalisation de photo détecteurs compacts, comme décrit dans l'article de T. Baehr-Jones et al., Optics Express, 13(14), pp.5216-5226, 2005.

Dans cette structure, le champ optique est augmenté et confiné dans la fente, à la fois géométriquement et optiquement, d'autant plus que la fente est étroite et que le contraste d'indices de réfraction est élevé.

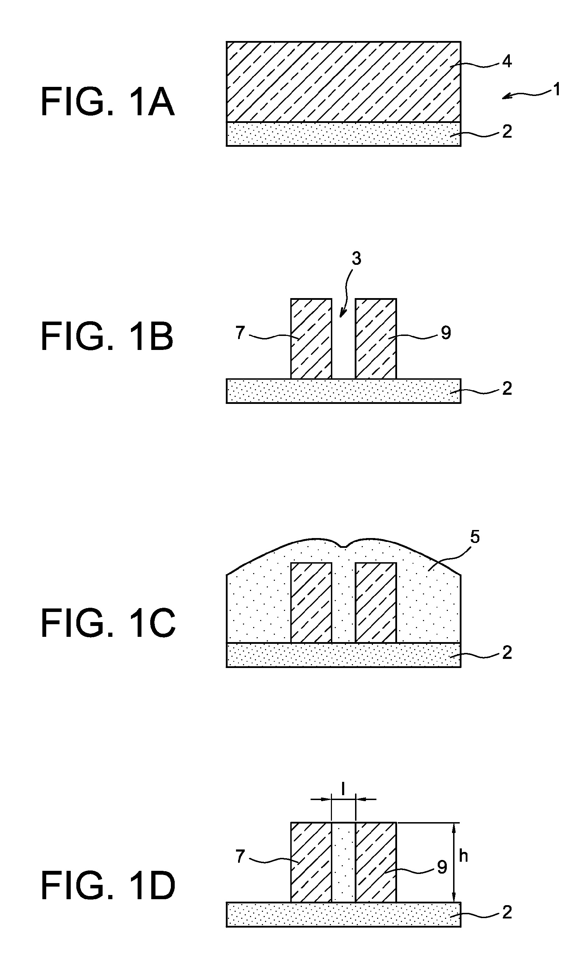

Pour intégrer ce matériau dans le guide à fente, on met généralement en oeuvre un procédé de fabrication tel qu'illustré sur les figures 1A-1D. Dans un substrat 1 en SOI (figure 1A, sur laquelle les références 2 et 4 désignent respectivement une couche de SiO₂ et une couche de silicium), on grave (figure 1B) une fente 3. Deux parois latérales 7, 9 en silicium sont ainsi formées, de part et d'autre de cette fente. On procède ensuite à un remplissage avec un matériau 5 comme illustré sur la figure 1C. Une étape de planarisation et de gravure conduisent à la structure de la figure 1D.

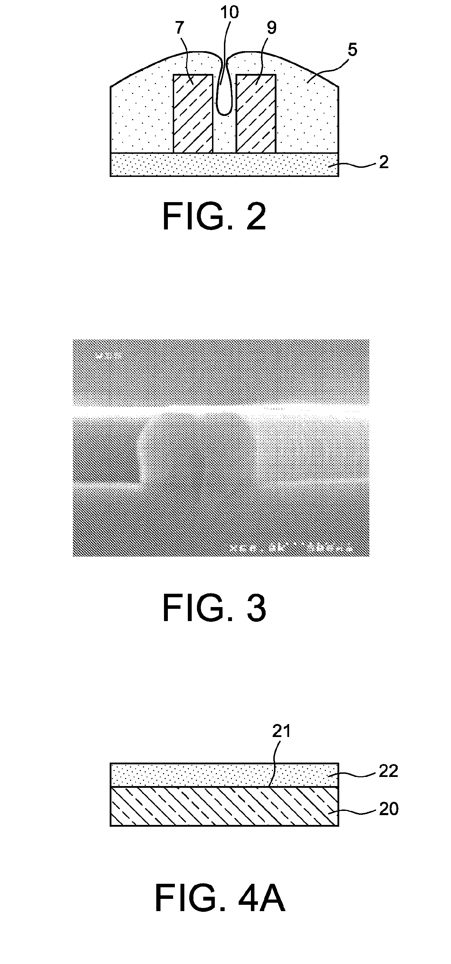

Cependant, aucun essai de remplissage n'a jusqu'à présent été conclu dans la mesure où une faible température de dépôt (par exemple par PECVD) ne permet pas le remplissage de la fente 3. Ce problème se présente notamment pour un facteur de forme (équivalent de la hauteur h sur la largeur 1 de la fente) supérieur à 1.5. Cela se manifeste par la formation d'une bulle 10 dans la fente 3, dégradant les performances du guide, comme illustré sur la figure 2.

Parfois, il est impossible de remplir la fente. Dans ce cas, on n'a pas seulement une bulle liée à un défaut de remplissage, mais un défaut de remplissage.

Par exemple les différents dépôts PECVD suivants ont été testés: SiO₂ (avec une source SiH₄) à 480°C et 350°C, SiO₂ (TEOS, TetraEthylOrthoSilicate à 400°C et 350°C et SiOₓ (avec une source SiH₄/N₂O) à 400°C.

Comme il est possible de le constater sur la Figure 3, représentant une vue en coupe d'un guide à fente 2 prise au Microscope Electronique à Balayage, la fente n'est pas remplie, et ce quel que soit le type de dépôt ou de matériau. Pour chacun des essais, une bulle d'air apparaît, créée par l'accumulation de dépôt sur la partie supérieure des parois de silicium.

### EXPOSÉ DE L'INVENTION

L'invention propose un procédé alternatif de fabrication qui permet d'éviter l'étape délicate de remplissage de la fente.

L'invention concerne d'abord un procédé de réalisation d'un guide à fente, dans lequel :
a) on forme une couche de matériau d'indice de réfraction inférieur à celui du silicium sur une première couche de silicium qui repose elle-même sur une couche d'oxyde de silicium,
   puis :
b) on forme une deuxième couche de silicium (28) sur la couche de matériau d'indice de réfraction inférieur à celui du silicium, cette deuxième couche constituant un empilement avec la couche de matériau d'indice de réfraction inférieur à celui du silicium et la première couche de silicium, la couche de matériau d'indice de réfraction inférieur à celui du silicium étant comprise entre les deux couches de silicium,
c) on grave cet empilement, la couche d'oxyde de silicium (SiO₂) formant la couche d'arrêt de cette gravure.

A titre de matériau d'indice inférieur à celui du silicium, on peut prendre du dioxyde de silicium Si02, du nitrure de silicium SiN ou du SiOₓ non stoechiométrique (x<2).

Dans le cas de l'oxyde de silicium SiOₓ non stoechiométrique (x<2), le procédé peut en outre comporter:
d) une étape de recuit de la couche d'oxyde de silicium (SiOₓ), après l'étape a), et avant ou après l'une des étapes b) ou c).

Mais, de préférence, l'étape de recuit est réalisée après l'étape a) et avant l'étape b).

L'invention permet de réaliser une structure alternative de type horizontal (la couche guide est disposée parallèlement à un substrat), pour laquelle la polarisation change, mais les propriétés de confinement de la lumière restent inchangées.

L'épaisseur de la couche d'oxyde de silicium (SiO₂) formant la couche d'arrêt de la gravure est de préférence supérieure à 1µm dans le but d'éviter les interférences avec le circuit situé en dessous.

La couche d'oxyde de silicium peut être formée par dépôt sur le substrat de Silicium, par implantation d'oxygène à travers la première couche de silicium suivie d'un recuit, ou par oxydation thermique d'une plaque de silicium.

La couche d'oxyde de silicium et la première couche de silicium peuvent être respectivement la couche d'oxyde et la couche superficielle d'un substrat de type SOI.

Une encapsulation du guide à fente obtenu peut être réalisée, par une couche de SiO₂.

La deuxième couche de silicium peut être réalisée sous forme amorphe.

La couche de matériau d'indice inférieur à celui du silicium peut être formée sur la première couche de silicium par PECVD ou LPCVD.

### BRÈVE DESCRIPTION DES DESSINS

- Les figures 1A-1D représentent des étapes d'un procédé standard de réalisation de guide à fente.
- La figure 2 illustre la présence d'une bulle d'air lors d'un procédé standard de fabrication d'un guide à fente.
- La figure 3 est une vue en coupe au MEB d'un essai de remplissage pour un procédé standard de fabrication d'un guide à fente.
- Les figures 4A-4E sont des étapes d'un procédé selon l'invention.
- Les figures 5A-5E sont des étapes particulières d'un procédé selon l'invention.

### EXPOSÉ DÉTAILLÉ DE MODES DE RÉALISATION PARTICULIERS

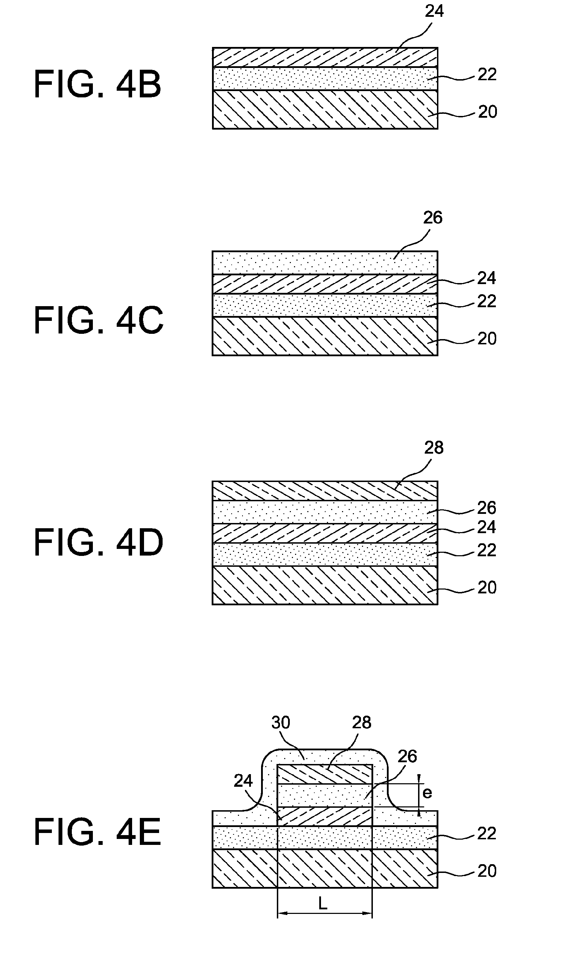

Un procédé de fabrication selon l'invention va être décrit en liaison avec les figures 4A-4E.

Dans une première étape (figure 4A) on procède, sur une surface plane 21 d'un substrat 20 de silicium, au dépôt ou à la croissance d'une première couche 22 d'oxyde (dit oxyde de silicium SiO₂). La couche 22 de SiO₂ peut être également formée par implantation d'oxygène suivie d'un recuit (procédé SIMOX).

Une couche de silicium 24 est ensuite déposée ou formée sur la couche d'oxyde 22. Cette couche 24, ainsi que les couches dont il est fait mention ci-dessous, peut être formée par PECVD ou LPCVD

On peut donc, selon l'invention, déposer le silicium 24 sous forme amorphe (dépôt PECVD), à partir d'une plaque 20 de silicium standard, ayant subi un dépôt 22 d'oxyde de silicium ou une oxydation thermique. L'épaisseur de cet oxyde 22, de préférence supérieure à 1µm, est telle que les pertes induites par couplage avec le substrat ou avec le circuit CMOS devant être situé au dessous du SiO₂ sont évitées.

Il est ensuite procédé à la formation ou au dépôt d'une couche 26 de matériau d'indice de réfraction inférieur à celui du silicium, par exemple du dioxyde de silicium Si02, du nitrure de silicium SiN ou du SiOₓ non stoechiométrique (x<2), sur la couche de silicium 24 par PECVD ou LPCVD(figure 4C).

On procède (figure 4D) à un deuxième dépôt d'une couche de silicium 28, sur la couche 26. Ce deuxième dépôt 28 de silicium est de préférence réalisé sous forme amorphe (par voie PECVD), qui est pratiquement équivalent du Si monocristallin en termes de caractéristiques optiques.

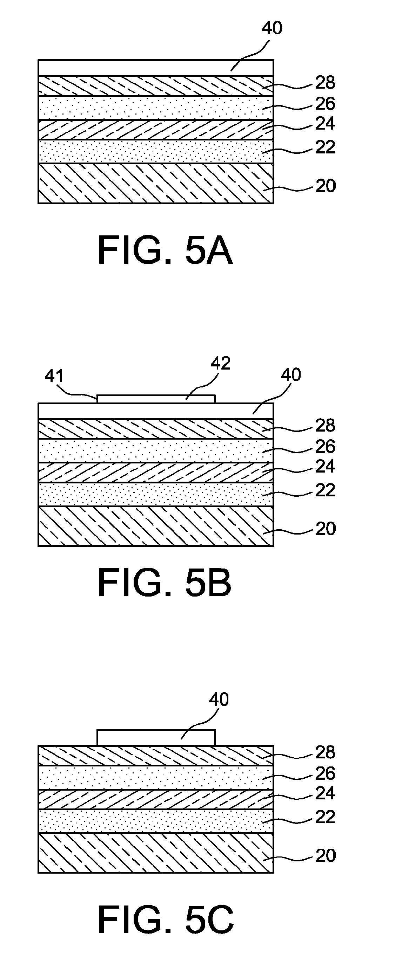

Une étape de lithographie et de gravure de l'ensemble des couches 24-26-28 (figure 4E) est ensuite réalisée, la gravure étant arrêtée sur la couche 22 d'oxyde. Cette couche d'oxyde a pour fonction d'être une couche d'arrêt, mais elle isole aussi la partie électrique de la partie optique et permet d'éviter les pertes optiques. Des sous-étapes particulières de lithographie et de gravure de l'ensemble des couches 24-26-28, avec un masque dur, seront détaillées ci-dessous en liaison avec les figures 5A-5D.

La couche 24 de silicium est soit en silicium amorphe (déposé par PECVD), soit en silicium monocristallin : dans ce deuxième cas, l'élément de départ, obtenu à partir d'une plaque SOI, est un empilement d'une couche en dioxyde de silicium et d'une couche en silicium.

Il est également possible de réaliser un tel empilement à partir d'une plaque SOI ayant une couche de silice 22 enterrée, d'épaisseur par exemple supérieure à 1µm et une épaisseur de silicium 24 souhaitée. On réalise ensuite le dépôt 26 de matériau d'indice de réfraction inférieur à celui du silicium, puis le deuxième dépôt 28 de silicium peut être réalisé sous forme amorphe (par voie PECVD). Avec le Silicium amorphe il y a peu de pertes optiques. On forme ensuite le guide par lithographie et gravure.

Des étapes de lithographie et de gravure de l'ensemble des couches 24-26-28, à l'aide d'un masque dur, vont être plus particulièrement détaillées en liaison avec les figures 5A-5D.

Par exemple, sur la couche de silicium 28 de la structure de la figure 4D, on forme (figure 5A) une couche 40 de masque dur, par exemple en dioxyde de silicium.

Une résine 42 est ensuite déposée (figure 5B) ; elle subit une lithographie, par exemple à 248 nm, permettant ainsi une définition des contours 41 de la zone à graver.

Le masque dur 40 est ensuite gravé, et la résine 42 éliminée (figure 5C).

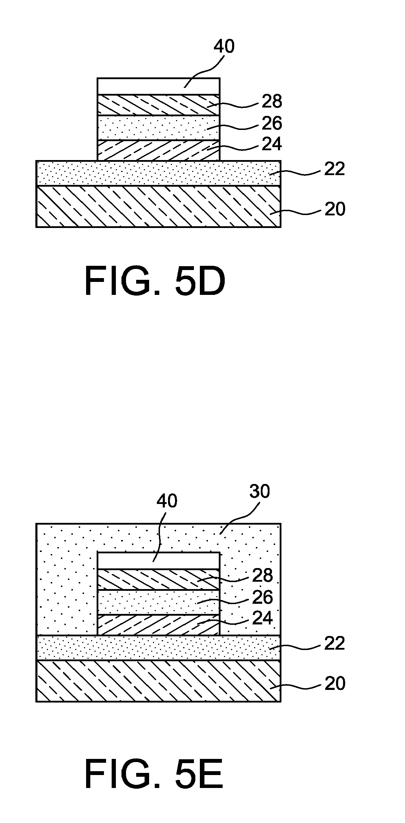

Les 3 couches 24, 26, 28 peuvent ensuite être gravées (figure 5D).

Ce mode de réalisation des figure 5A-5D permet d'éviter un problème lié à la seule utilisation de la résine 42 en tant que masque de gravure : en effet, elle risque alors d'être elle-même entièrement consommée en cours de la gravure des couches 22, 24, 26, ces dernières pouvant alors être elle mêmes attaquées alors qu'elles devraient au contraire être masquées. La présence du masque dur 40 permet donc de graver l'empilement sans risque.

Lorsque le matériau d'indice de réfraction inférieur à celui du silicium est du SiOₓ non stoechiométrique (x<2), un recuit du SiOₓ pour la formation de nanocristaux de silicium peut être effectué après le dépôt de SiOₓ et avant le deuxième dépôt 28 de silicium, ou après ce deuxième dépôt de silicium 28 et avant gravure du guide, ou après la gravure du guide.

Mais, si le SiOₓ est déposé par PECVD, son épaisseur diminue lors du recuit. Dans ce cas, il est préférable d'insérer l'étape de recuit juste après le dépôt de SiOₓ et avant le deuxième dépôt de silicium 28. Sinon il se peut qu'apparaissent des dislocations entre le SiOₓ et le Si. De plus, le recuit a pour effet d'augmenter les pertes optiques de la couche de Silicium.

Une fois le guide formé et gravé, une encapsulation 30 par du SiO₂ peut être effectuée (figure 4E). Dans le cas de l'utilisation d'un masque dur, l'étape d'encapsulation par du dioxyde de silicium 30 (procédé TEOS sur 2 µm) est illustrée sur la figure 5E.

Un dispositif selon l'invention présente une structure de guide à fente, réalisé sur une couche d'oxyde de silicium 22, ou encore dans un plan parallèle au plan 21 du substrat 20. La fente et son matériau 26 d'indice de réfraction inférieur à celui du silicium sont ainsi compris entre deux couches de silicium 24, 28, le tout reposant sur la couche d'arrêt 22 en oxyde de silicium. Cette structure permet de former le matériau de la fente avant l'une des parois 24 de silicium du guide. On évite ainsi les techniques de réalisation par remplissage d'une fente entre deux couches de silicium déjà formées et donc les problèmes de formation de bulles mentionnés ci-dessus.

L'invention est particulièrement intéressante pour un facteur de forme (équivalent de la longueur L sur l'épaisseur e de la fente, figure 4E) supérieur à 1.5, par exemple dans le cas d'un dépôt PECVD.

L'invention s'applique dans le domaine des interconnexions optiques, des interconnections optiques intra puces, des télécommunications optiques.

## Revendications

1. Procédé de réalisation d'un guide à fente, dans lequel :
a) on forme une couche de matériau (26) d'indice de réfraction inférieur à celui du silicium sur une première couche de silicium (24) qui repose elle-même sur une couche (22) d'oxyde de silicium (SiO₂),
puis :
b) on forme une deuxième couche de silicium (28) sur la couche de matériau (26) d'indice de réfraction inférieur à celui du silicium, cette deuxième couche constituant un empilement avec la couche de matériau (26) d'indice de réfraction inférieur à celui du silicium et la première couche de silicium (24), la couche de matériau (26) d'indice de réfraction inférieur à celui du silicium étant comprise entre les deux couches de silicium,
c) on grave cet empilement, la couche (22) d'oxyde de silicium (SiO₂) formant couche d'arrêt de cette gravure.

2. Procédé selon la revendication 1, l'épaisseur de la couche d'oxyde de silicium (SiO₂) formant couche d'arrêt de la gravure étant supérieure à 1 µm.

3. Procédé selon la revendication 1 ou 2, la couche (22) d'oxyde de silicium étant formée par implantation d'oxygène à travers la première couche de silicium (24) suivie d'un recuit, ou par oxydation thermique d'une plaque de silicium.

4. Procédé selon la revendication 1 ou 2, la couche (22) d'oxyde de silicium et la première couche (24) de silicium étant respectivement la couche d'oxyde et la couche superficielle d'un substrat de type SOI.

5. Procédé selon l'une des revendications 1 à 4, comportant en outre une encapsulation du guide à fente par une couche (30) de SiO₂.

6. Procédé selon l'une des revendications 1 à 5, la deuxième couche (28) de silicium étant réalisée sous forme amorphe.

7. Procédé selon l'une des revendications 1 à 5, la couche (26) de matériau d'indice inférieur à celui du silicium étant formée sur la première couche de silicium (24) par PECVD ou LPCVD.

8. Procédé selon l'une des revendications 1 à 7, l'étape c) de gravure de l'empilement ayant lieu à l'aide d'un masque dur (40).

9. Procédé selon l'une des revendications 1 à 8, le matériau d'indice inférieur à celui du silicium étant du dioxyde de silicium Si02, ou du nitrure de silicium SiN ou du SiOₓ non stoechiométrique (x<2).

10. Procédé selon l'une des revendications 1 à 8, le matériau d'indice inférieur à celui du silicium étant du SiOₓ non stoechiométrique (x<2), et comportant en outre une étape :
d) de recuit de la couche d'oxyde de silicium (SiOₓ) (26) après l'étape a), et avant ou après l'une des étapes b) ou c).

11. Procédé selon la revendication 10, l'étape de recuit étant réalisée après l'étape a) et avant l'étape b).
